# EUROPEAN PATENT SPECIFICATION

(11) **EP 4 001 134 B1**
(45) Date of publication and mention of the grant of the patent: **01.01.2025**
(21) Application number: 21209270.4
(22) Date of filing: 19.11.2021
(51) Int. Cl.: B65B 11/02, B62B 5/00, B66F 9/07, B62B 3/06, B66F 9/12

(54) **CUTTING AND WELDING DEVICE FOR A WRAPPING MACHINE**
SCHNEID- UND SCHWEISSVORRICHTUNG FÜR EINE VERPACKUNGSMASCHINE
DISPOSITIF DE SOUDAGE ET DE COUPE POUR UNE MACHINE D'EMBALLAGE

(30) Priority: 20.11.2020 ES 202032512 U
(43) Date of publication of application: 25.05.2022
(73) Proprietor: Aranguren Comercial del Embalaje, S.L.U., 46130 Massamagrell Valencia (ES)
(72) Inventor: Rubio Casalta, Valentin, 46019 Valencia (ES); Bereber Goiricelaya, Roberto, 46410 Sueca (ES)
(74) Representative: Soler Lerma, Santiago

(56) References cited:
- EP-A1- 2 256 081
- FR-A1- 2 942 776

## Description

As its name indicates, the invention is an electric modular cutting and welding device of reduced size, suitable for being located between the blades of an electric mobile pallet truck. The system complements wrapping machines that comprise a shaft from which a mobile arm hangs with a film spool holder carriage and wherein the spool holder carriage orbits around wrapping the load in film such that, in an automated fashion, it performs the film fastening operations at the start of the wrapping cycle, welding the film and cutting it at the end of the wrapping cycle.

It belongs to the art sector of wrapping machines.

### BACKGROUND

Wrapping machines generally have a first film fastening process which enables the start of the wrapping, and once the wrapping process completes, the film is then welded and cut.

In general, the film is held on a spool that wraps the pallet perimeter, whether the spool moves upwardly and downwardly only and the pallet rotates, or the pallet remains in a fixed position, and the film spool rotates around it, wrapping it.

There is a large variety of wrapping machines, some of which are present on production lines and are fixed, and others are externally located outside the production line and can even be transportable.

Normally most fixing, welding, and film cutting processes are done manually, and this implies a disadvantage associated with the times in its execution since, for each start and end of the wrapping process, an operator is required to carry out the tasks of starting, attachment of the film to the pallet and end of the cycle.

Patent ES2341209, owned by the applicant itself, refers to a wrapping machine with a lower rotary arm with a spool holder carriage that generates a tension suitable for wrapping. This solution, however, requires a manual operation for the start and end of the wrapping cycle leading to additional time expenditure.

The patent EP2256081, owned by the applicant itself, refers to a structure attached to the body of an electric pallet truck that has means to move structure so as to free the area above the truck's batteries having also means to join to it a functional device such a wrapping device. The structure has an inverted U-shape formed of a top and sides. This solution requires a manual operation for the film cutting and welding process.

To solve this problem, known solutions exist that require pneumatic installations, which need a pre-installation where the wrapping machine will go.

One example of this type of execution is patent ES2090944 which relates to a unit for thermo-sealing a plastic film used in machines to wrap stacks of articles to palletize them. These types of solutions require complex installations of considerable size.

As patent US4619102, which relates to a system for thermo-sealing a wrapping film that holds the cut end in position in such a way that enables the subsequent operation of wrapping a pallet, this system, just like the previous one, requires a pneumatic system to activate the device's pistons and cylinders.

The process of fastening the film, welding, and subsequent cut in most wrapping machines is performed manually except for patent EP13791009.7 owned by the applicant ES1077170U, which relates to the automated process of cutting and welding suitable for coupling to semi-automatic wrapping machines, also called external, this invention eliminates any requirement of external dependency except electrical power.

However, this device requires a space that, despite not being a problem in conventional wrapping machines, prevents the use thereof in portable wrapping machines of the kind associated with a pallet truck, given that the only space available is in between the blades thereof.

### DESCRIPTION OF THE INVENTION

In order to overcome the problems set out, the invention refers to a cutting and welding device suitable for being situated between the blades of an electric mobile pallet truck, preferably in the closest section to the main body thereof.

The device is designed for use in wrapping machines that comprise a shaft from which a mobile arm hands with a film spool holder carriage and wherein the spool holder carriage orbits around wrapping the load in the film while the load remains static.

The device presents a work zone and a rest zone, separated by a central zone or a transit zone.

The work zone of the device, located furthest away from the main body of the pallet truck, comprises:
- A film fastening gripper;
- A contrast plate that collaborates with the cutting and welding operations;
- Moreover, at the time of performing the cutting and welding operations, a welding carriage moves to this work zone.

The rest zone, contiguous to the main body of the pallet truck in the direction in which the blades are projected, comprises:
- The welding carriage when it is not performing cutting and welding operations;
- Drive motor of the contrast plate;
- A linear electric actuator.

Between the rest zone and the work zone, there is a central zone or transit zone sufficiently extensive and free of obstacles to enable the passage of the spool holder carriage in the wrapping operations.

The welding carriage moves from the rest zone to the work zone, and inversely, preferably supported by a guide that crosses the transit zone and is driven by a linear electric actuator.

The contrast plate and the gripper are in the work zone and retract while not in use in a fixed location between the pallet truck blades at the height of the physical limit of the pallet.

Except for the cutting and welding carriage, the rest of the elements remain, during rest, below the upper level of the pallet truck blades, enabling them to be covered with protective planks without over-raising the height de the blades or interfering with the maneuvers of the spool holder carriage.

This protection leaves one free track, which enables the path of the welding carriage.

The wrapping cycle begins by wrapping the palletized load arranged on the blades of the pallet truck.

For this, the gripper is in raised position holding the film from the end of the previous cycle. The spool of the film starts to turn around the load to be wrapped, and in these first turns the contrast plate, which is in a raised position, stays between the load and the film, and remains like this until the wrapping cycle ends.

Apart from the movement around the load, the film spool performs an upward and downward movement, encompassing the entire height and volume of the load to be wrapped.

During this process, the cutting and welding carriage are set in the rest zone.

Once the wrapping finishes, the cutting and welding carriage moves from the rest zone to the work zone and presses with heat against the contrast plate, thus welding the different layers of film and cutting the film at a point between the weld and the spool, leaving the loose film end trapped by the gripper.

At this point, the cutting and welding carriage returns to the rest zone, and the contrast plate is retracted and remains housed in the gap between the pallet truck blades, thus ending the wrapping cycle, allowing the pallet with the load already wrapped to be freely handled and to load another pallet onto the pallet truck for the start of a new cycle.

### BRIEF DESCRIPTION OF THE DRAWINGS

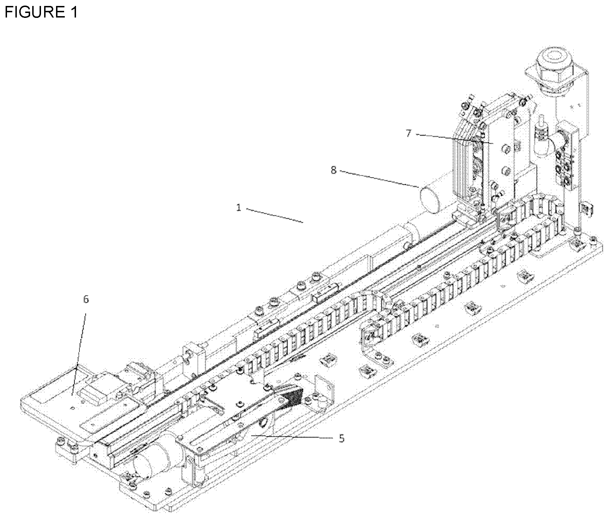

FIGURE 1 shows a perspective view, where it is possible to see the device (1) which comprises the welding and cutting carriage (7) at rest, the drive motor (8) of the contrast plate, the contrast plate (6), and the retracted gripper (5).

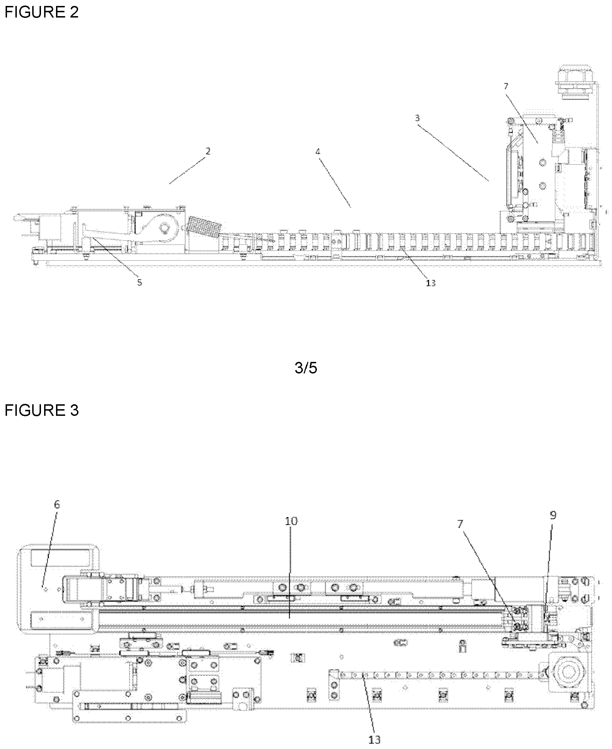

FIGURE 2 shows a side view, the arrangement and location of the work zone (2) showing the retracted gripper (5). Also shown is the rest zone (3) that comprises the welding and cutting carriage (7) and the transit zone (4) from which the cable-carrying chain (13) can be seen and which connects both zones.
FIGURE 3 shows a top view where it is possible to see the guide (10), which enables the displacement of the welding and cutting carriage (7) from the work zone to the rest zone and vice versa, the linear electric actuator (9) and the cable-carrying chain (13) that enable the cables of the device to be guided throughout the entire route. The contrast plate in the rest position is also shown.

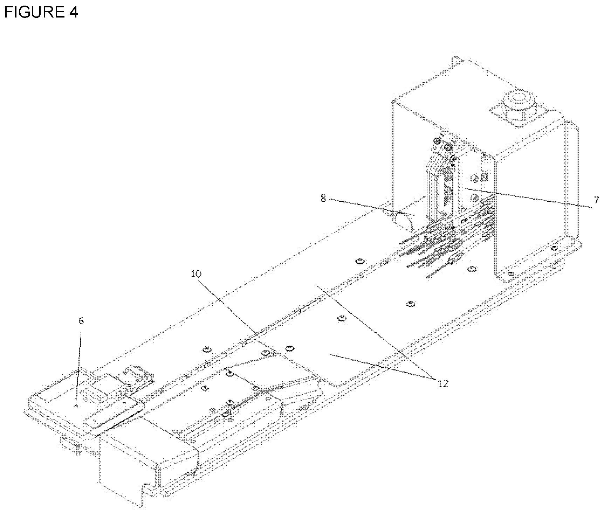

FIGURE 4 presents a view of the device with the protective planks (12) that safeguard the elements of the device without exceeding the height limit of the pallet, showing the guide (10), the drive motor (8), the cutting and welding carriage (7) and the contrast plate (6).

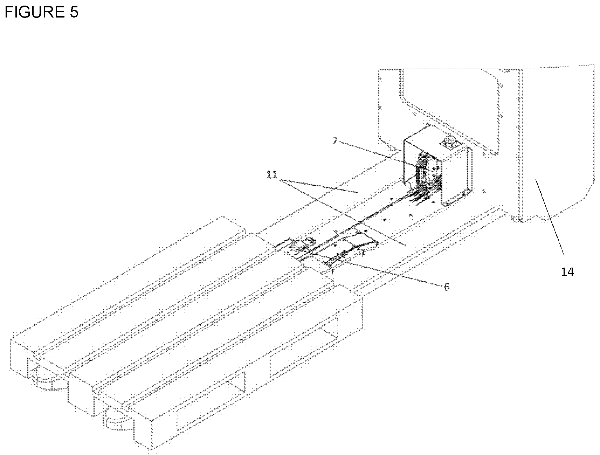

FIGURE 5 shows a perspective view of the device combination between the pallet truck blades (11), and with a pallet inserted, and the location of the system elements, the welding and cutting carriage (7) and the gripper (6) are displayed clearly. The main body (14) of the pallet truck is also shown.

The shaft, arm and spool holder carriage of the wrapping machine have not been included in any drawing to avoid elements that might distract away from the invention claimed.

### DESCRIPTION OF A WAY OF CARRYING OUT THE INVENTION

The present invention is neither unique nor limiting, but merely expository of the object to be protected hereby.

The cutting and welding system consists of a device (1) that has a work zone (2) and a rest zone (3) separated by a transit zone (4) such that the work zone (2) comprises:
- A gripper (5);
- A contrast plate (6);
- And in cutting and welding operations, a cutting and welding carriage (7).

The rest zone (3) located contiguous to the main body of the pallet truck comprises:
- At rest a cutting and welding carriage (7), wherein this cutting and welding carriage moves to the work zone during the cutting and welding operations;
- Drive motor (8) of the contrast plate;
- Linear electric actuator (9);

The transit zone (4) has a larger space than the spool holder carriage such that it is sufficient to enable the passage of the spool holder carriage in the wrapping operations.

The cutting and welding carriage (7) is driven by the linear electric actuator (9) that moves it from the rest zone to the work zone and back again through the transit zone (4) by way of a guide (10).

Both the gripper (5) and the contrast plate (6) are located at a fixed location between the pallet truck blades (11) and retract while they are not in use.

Some protective planks (12), that cover the elements that comprise the device, with the exception of the welding carriage (7), and the guide (10) thereof which enables its displacement from the rest zone (3) to the work zone (2) and vice versa.

To begin a wrapping cycle, the gripper (5), in a raised position, holds the film; the spool of the film (not shown) begins to turn around the load to be wrapped, the drive motor (8) of the contrast plate activates the contrast plate (6) remaining in raised position between the pallet load and the film, maintaining this position until the wrapping cycle ends.

Once the wrapping action finishes, the cutting and welding carriage (7) moves from the rest zone (3) to the work zone (2) driven by the linear electric actuator (9) said carriage presses against the contrast plate (6) applying heat and thus welding the layers of film, to then cut the film at a point between the weld and the gripper, the remaining loose film is held by the gripper (5).

Once the welding and cutting has ended, the welding and cutting carriage (7) moves again to the rest zone (3) and the contrast plate (6) is retracted to a horizontal position by the drive motor (8) housed in the space between the blades of the pallet truck (11) for the start of a new wrapping cycle.

## Claims

1. A CUTTING AND WELDING DEVICE FOR A WRAPPING MACHINE, wherein the wrapping machine comprises a pallet truck, with a shaft joined to its main body, and from this shaft a mobile arm hangs with a film spool holder carriage and wherein the spool holder carriage orbits around to wrap a load in film, **characterized in that** the cutting and welding device is located between the pallet truck blades (11) and comprises a work zone (2) and a rest zone (3), both being separated by a transit zone (4) that connects the rest zone (3) and the work zone (3);
wherein the work zone of the device, set in its position furthest away from the main body (14) of the pallet truck, comprises:
• a film fastening gripper (5);
• a contrast plate (6) that collaborates in the cutting and welding operations;
• and, at the time of performing the cutting and welding operations, a welding carriage (7) able to move to this work zone;
wherein the rest zone (3), contiguous to the main body of the pallet truck on the side on which the blades are projected, comprises:
• the welding carriage (7), when no cutting and welding operations are being performed;
wherein the welding and cutting carriage (7), when crossing the transit zone (4), is able to move from the rest zone (3) towards the work zone (2) where it is able to perform the cutting and welding operations, and then return to the rest zone (3), and wherein the transit zone (4) is extensive enough to enable the passage of the spool holder carriage in the wrapping operations.

2. THE CUTTING AND WELDING DEVICE according to claim 1, **characterized by** further comprising a linear electric actuator (9) that drives the welding and cutting carriage (7).

3. THE CUTTING AND WELDING DEVICE according to claim 1, **characterized in that** the linear electric actuator (9) is located in the rest zone (3).

4. THE CUTTING AND WELDING DEVICE according to claim 1, **characterized in that** the welding and cutting carriage (7) moves towards the work zone (2) by means of a guide (10) that crosses the transit zone.

5. THE CUTTING AND WELDING DEVICE according to claim 1, **characterized by** further comprising a drive motor (8) of the contrast plate (6).

6. THE CUTTING AND WELDING DEVICE according to claim 5, **characterized in that** the drive motor (8) is located in the rest zone (3).

7. THE CUTTING AND WELDING DEVICE according to claim 1, **characterized in that** the contrast plate (6) pivots from a horizontal to a vertical position and vice versa.

## Patentansprüche

1. SCHNEID- UND SCHWEISSVORRICHTUNG FÜR EINE UMWICKLUNGSMASCHINE, wobei die Umwicklungsmaschine einen Palettenhubwagen mit einer Welle umfasst, die mit seinem Hauptkörper verbunden ist, und an dieser Welle ein beweglicher Arm mit einem Folien-Spulenhalterwagen hängt, und wobei der Spulenhalterwagen um eine Ladung herumläuft, um sie in Folie einzuwickeln, **dadurch gekennzeichnet, dass** die Schneid- und Schweißvorrichtung zwischen den Gabelzinken des Palettenhubwagens (11) angeordnet ist und einen Arbeitsbereich (2) und einen Ruhebereich (3) umfasst, die beide durch einen Durchgangsbereich (4) getrennt sind, der den Ruhebereich (3) und den Arbeitsbereich (3) verbindet;
wobei der Arbeitsbereich der Vorrichtung, der in seine am weitesten von dem Hauptkörper (14) des Palettenhubwagens entfernte Position eingestellt ist, Folgendes umfasst:
- einen Folienbefestigungsgreifer (5);
- eine Kontrastplatte (6), die an den Schneid- und Schweißvorgängen beteiligt ist;
- und, bei der Ausführung der Schneid- und Schweißvorgänge, einen Schweißwagen (7), der sich zu diesem Arbeitsbereich hinbewegen kann;
wobei die Ruhezone (3), die an den Hauptkörper des Palettenhubwagens an der Seite angrenzt, an der die Gabelzinken herausragen, Folgendes umfasst:
- den Schweißwagen (7), wenn keine Schneid- und Schweißvorgänge durchgeführt werden;
wobei sich der Schweiß- und Schneidwagen (7) beim Überqueren des Durchgangsbereichs (4) von der Ruhezone (3) in Richtung der Arbeitszone (2) bewegen kann, wo er in der Lage ist, die Schneid- und Schweißvorgänge durchzuführen, und dann in die Ruhezone (3) zurückzukehren, und wobei der Durchgangsbereich (4) ausreichend groß ist, um den Durchgang des Spulenhalterwagens bei den Umwicklungsvorgängen zu ermöglichen.

2. SCHNEID- UND SCHWEISSVORRICHTUNG nach Anspruch 1, **dadurch gekennzeichnet, dass** sie ferner einen linearen elektrischen Aktuator (9) umfasst, der den Schweiß- und Schneidwagen (7) antreibt.

3. SCHNEID- UND SCHWEISSVORRICHTUNG nach Anspruch 1, **dadurch gekennzeichnet, dass** der lineare elektrische Aktuator (9) in der Ruhezone (3) angeordnet ist.

4. SCHNEID- UND SCHWEISSVORRICHTUNG nach Anspruch 1, **dadurch gekennzeichnet, dass** sich der Schweiß- und Schneidwagen (7) mittels einer Führung (10), die den Durchgangsbereich kreuzt, in Richtung des Arbeitsbereichs (2) bewegt.

5. SCHNEID- UND SCHWEISSVORRICHTUNG nach Anspruch 1, **dadurch gekennzeichnet, dass** sie ferner einen Antriebsmotor (8) der Kontrastplatte (6) umfasst.

6. SCHNEID- UND SCHWEISSVORRICHTUNG nach Anspruch 5, **dadurch gekennzeichnet, dass** der Antriebsmotor (8) in der Ruhezone (3) angeordnet ist.

7. DIE SCHNEID- UND SCHWEISSVORRICHTUNG nach Anspruch 1, **dadurch gekennzeichnet, dass** die Kontrastplatte (6) von einer horizontalen in eine vertikale Position schwenkt und umgekehrt.

## Revendications

1. DISPOSITIF DE COUPE ET DE SOUDAGE POUR UNE MACHINE D'EMBALLAGE, dans lequel la machine d'emballage comprend un transpalette, avec un arbre joint à son corps principal, et à partir de cet arbre un bras mobile est suspendu à un chariot porte-bobine de film, le chariot porte-bobine tournant autour de lui pour envelopper une charge de film, **caractérisé en ce que** le dispositif de coupe et de soudage est situé entre les pales du transpalette (11) et comprend une zone de travail (2) et une zone de repos (3), toutes deux séparées par une zone de transit (4) qui relie la zone de repos (3) et la zone de travail (3) ;
dans lequel la zone de travail du dispositif, réglée dans sa position la plus éloignée du corps principal (14) du transpalette, comprend :
- une pince de fixation de film (5) ;
- une plaque de contraste (6) qui collabore aux opérations de coupe et de soudage ;
- et, au moment d'effectuer les opérations de coupe et de soudage, un chariot de soudage (7) capable de se déplacer vers cette zone de travail ;
dans lequel la zone de repos (3), contiguë au corps principal du transpalette du côté sur lequel les pales sont projetées, comprend :
- le chariot de soudage (7), lorsqu'aucune opération de coupe et de soudage n'est effectuée ;
dans lequel le chariot de soudage et de coupe (7), lorsqu'il traverse la zone de transit (4), est capable de se déplacer de la zone de repos (3) vers la zone de travail (2) où il est capable d'effectuer les opérations de coupe et de soudage, puis de revenir à la zone de repos (3), et dans lequel la zone de transit (4) est suffisamment étendue pour permettre le passage du chariot porte-bobine lors des opérations d'emballage.

2. DISPOSITIF DE COUPE ET DE SOUDAGE selon la revendication 1, **caractérisé en ce qu'**il comprend en outre un actionneur électrique linéaire (9) qui entraîne le chariot de soudage et de coupe (7).

3. DISPOSITIF DE COUPE ET DE SOUDAGE selon la revendication 1, **caractérisé en ce que** l'actionneur électrique linéaire (9) est situé dans la zone de repos (3).

4. DISPOSITIF DE COUPE ET DE SOUDAGE selon la revendication 1, **caractérisé en ce que** le chariot de soudage et de coupe (7) se déplace vers la zone de travail (2) au moyen d'un guide (10) qui traverse la zone de transit.

5. DISPOSITIF DE COUPE ET DE SOUDAGE selon la revendication 1, **caractérisé en ce qu'**il comprend en outre un moteur d'entraînement (8) de la plaque de contraste (6).

6. DISPOSITIF DE COUPE ET DE SOUDAGE selon la revendication 5, **caractérisé en ce que** le moteur d'entraînement (8) est situé dans la zone de repos (3).

7. DISPOSITIF DE COUPE ET DE SOUDAGE selon la revendication 1, **caractérisé en ce que** la plaque de contraste (6) pivote d'une position horizontale à une position verticale et vice versa.
